# EUROPÄISCHE PATENTSCHRIFT

(11) **EP 3 319 775 B1**
(45) Veröffentlichungstag und Bekanntmachung des Hinweises auf die Patenterteilung: **13.03.2019**
(21) Anmeldenummer: 16727727.6
(22) Anmeldetag: 09.06.2016
(51) Int. Cl.: B29C 45/16, B29L 31/00, B29K 505/00, B29K 69/00, B29K 105/16

(54) **VERBUNDBAUTEIL UND VERFAHREN ZUM HERSTELLEN EINES VERBUNDBAUTEILS**
COMPOSITE COMPONENT AND METHOD FOR PRODUCING A COMPOSITE COMPONENT
PIÈCE COMPOSITE ET PROCÉDÉ DE FABRICATION D'UNE PIÈCE COMPOSITE

(30) Priorität: 07.07.2015 DE 102015212692
(43) Veröffentlichungstag der Anmeldung: 16.05.2018
(73) Patentinhaber: OSRAM GmbH, 80807 München (DE)
(72) Erfinder: RÖDER, Karl, 89555 Steinheim (DE)
(86) Internationale Anmeldenummer: PCT/EP2016/063098
(87) Internationale Veröffentlichungsnummer: WO 2017/005449

(56) Entgegenhaltungen:
- JP-A- H11 254 485
- US-A1- 2004 003 908
- Anonymous: "Integriertes Metall-Kunststoff-Spritzgießen Exzellenz durch Integration - Die kürzeste Prozesskette für Elektronikanwendungen", , 18. Oktober 2012 (2012-10-18), XP055292073, Gefunden im Internet: URL:http://www.ikv-aachen.de/fileadmin/ikv -uploads/Aktuelles-Presse/Veranstaltungen_ pdf/IKV_Projekt_IMKS_Fakuma_2012.pdf [gefunden am 2016-07-28] in der Anmeldung erwähnt

## Beschreibung

Die Erfindung betrifft ein Verfahren zum Herstellen eines Verbundbauteils aus einem Kunststoffmaterial und einem elektrisch leitfähigen Füllmaterial, wobei das Verfahren mindestens die folgenden Schritte aufweist: Formen eines Formkörpers aus dem Kunststoffmaterial, welcher Formkörper mindestens einen Rücksprung aufweist; und Einbringen von fließfähigem Füllmaterial in mindestens einen Rücksprung und Verfestigen des Füllmaterials. Die Erfindung betrifft auch ein Verbundbauteil aus Kunststoff und elektrisch leitfähigem Füllmaterial, das gemäß dem Verfahren hergestellt worden ist. Die Erfindung ist insbesondere anwendbar auf eine Beleuchtungsvorrichtung, insbesondere mit mindestens einem Kunststoff-Metall-Verbundbauteil.

Aus einer Informationsbroschüre "Integriertes Metall-Kunststoff-Spritzgießen" des Instituts für Kunststoffverarbeitung in Industrie und Handwerk an der RWTH Aachen ist eine Kombination von Kunststoff-Spritzguss und Metalldruckguss zu einem Multi-Material-Prozess bekannt. Um Leiterbahnstrukturen auf einer Spritzgießmaschine auf einen Kunststoffträger aufspritzen zu können, ist in Anlehnung an das Warmkammerdruckgießen von Metallen ein Zusatzaggregat entwickelt worden, das die Verarbeitung niedrigschmelzender Metalllegierungen auf Basis von Zinn, Silber und Kupfer ermöglicht. Das Metall wird dazu im flüssigen Zustand der Einspritzeinheit zugeführt. Darüber hinaus lassen sich kleine Mengen der leicht fließenden bzw. niedrigviskosen Metalllegierung reproduzierbar und angusslos verarbeiten.

Jedoch ist es dabei nachteilig, dass aufgrund einer großen Querschnittsfläche der Leiterbahnen ein hoher Materialeinsatz für lange Kanäle nötig ist. Zudem ist eine mögliche Leiterbahnlänge bisher auf ca. 500 mm beschränkt, da es nach einem Einbringen der geschmolzenen Metalllegierungen in entsprechende Rücksprünge oder Aussparungen in dem Kunststoff-Spritzgusskörper zu einem merklichen Wärmeverlust über das die Rücksprünge oder Aussparung(en) abdeckende Werkzeug kommt. Zudem kann es bei einer höheren mechanischen Beanspruchung (z.B. einem Rütteln) des fertigen Verbundbauteils zu einem Lösen des Metalls aus der Aussparung kommen, was sich z.B. durch eine aufwändige zusätzliche Umspritzung des Verbundbauteils verhindern lässt. Zudem ist ein Fertigungsaufwand für eine Abdichtung der niederviskosen Metalllegierung während des Metalldruckgießens hoch.

Es ist die **Aufgabe** der vorliegenden Erfindung, die Nachteile des Standes der Technik zumindest teilweise zu überwinden.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Herstellen eines Verbundbauteils aus einem Kunststoffmaterial und einem elektrisch leitfähigen Füllmaterial, wobei das Verfahren mindestens die folgenden Schritte aufweist: Formen eines Formkörpers aus dem Kunststoffmaterial, welcher Formkörper mindestens einen Rücksprung aufweist, zu dem benachbart mindestens ein Vorsprung angeordnet ist; Pressen des mindestens einen Vorsprungs so, dass dadurch Kunststoffmaterial in einen öffnungsseitigen Bereich des benachbarten Rücksprungs verdrängt wird; und Einbringen von fließfähigem Füllmaterial in mindestens einen Rücksprung und Verfestigen des Füllmaterials.

Dieses Verfahren weist den Vorteil auf, dass das in den Rücksprung verdrängte Kunststoffmaterial eine Barriere zwischen dem in dem Rücksprung befindlichen Füllmaterial und einem außen anliegenden Werkzeug darstellt. Dadurch wird ein Wärmeabfluss von dem Füllmaterial zu dem Werkzeug verringert, so dass eine Fließfähigkeit des Füllmaterials für eine größere Zeitdauer gegeben ist, wodurch wiederum auf einfache Weise längere Leiterbahnen erzeugt werden können, insbesondere von mehr als 500 mm. Zudem wird durch das in den Rücksprung verdrängte Kunststoffmaterial der Querschnitt des Rücksprungs verringert, so dass Leiterbahnen mit einer verkleinerten Querschnittsfläche hergestellt werden können, was einen Materialeinsatz verringert. Darüber hinaus ist ein Fertigungsaufwand für eine Abdichtung des Füllmaterials geringer oder sogar vernachlässigbar. Das in den Rücksprung verdrängte Kunststoffmaterial bewirkt zudem, dass das Füllmaterial mit dem Rücksprung ineinander greift und dadurch ("formschlüssig") in dem Rücksprung gehalten wird. So kann auf eine zusätzliche Umspritzung verzichtet werden. Ein weiterer Vorteil ist, dass das in den Rücksprung verdrängte Kunststoffmaterial als Schutz dienen kann, z.B. gegen eine mechanische und/oder chemische Beanspruchung und/oder als Berührschutz.

Das elektrisch leitfähige Füllmaterial kann beispielsweise ein (z.B. mit CNT-Fasern versetzter) Kunststoff oder ein Metall sein.

Der Rücksprung kann auch als Aussparung bezeichnet werden und dient der Aufnahme des Füllmaterials.

Dass das Kunststoffmaterial in einen öffnungsseitigen Bereich des benachbarten Rücksprungs verdrängt wird, umfasst insbesondere, dass dadurch eine Querschnittsfläche des Rücksprungs im Bereich seiner Öffnung oder Mündung verringert wird. Am und in der Nähe seines Grunds ändert sich der Querschnitt hingegen insbesondere nicht oder nur geringfügig. Das verdrängte Kunststoffmaterial wirkt somit als ein vollständiger oder teilweiser Verschluss für den Rücksprung und folglich auch für das darin befindliche Füllmaterial.

Dass das Füllmaterial fließfähig ist, kann umfassen, dass es beim Einfüllen ein noch nicht oder noch nicht stark ausgehärtetes Grundmaterial aufweist, beispielsweise ein aushärtbares Elastomer-Gemisch. Das Verfestigen entspricht dann einem Aushärten.

Alternativ kann sich das Füllmaterial beim Einfüllen in einem geschmolzenen Zustand befinden. Das Verfestigen entspricht dann einem Erstarren.

Mindestens ein Rücksprung kann insbesondere ein länglicher Rücksprung sein, z.B. in Form einer Längsnut oder eines Grabens. Dies ermöglicht eine Bildung einer Leiterbahn in dem Rücksprung.

Es ist eine Ausgestaltung, dass mindestens ein Rücksprung unmittelbar in den mindestens einen Vorsprung übergeht. Dies ergibt den Vorteil, dass eine besonders starke Verdrängung von Kunststoff in den Rücksprung auftritt, insbesondere entsprechend einem Volumen des Vorsprungs.

Das benachbarte Anordnen des Vorsprungs kann aber auch umfassen, dass der Vorsprung einen Abstand zu dem Rücksprung (d.h., zu dessen Mündungsrand) aufweist. Dies ergibt die Möglichkeit, den Kunststoff gleichmäßiger über die Tiefe des Rücksprungs in diesen zu verdrängen.

Es ist eine Weiterbildung, dass der Vorsprung so weit gepresst wird, dass die dem Vorsprung zugeordnete, in Pressrichtung projizierte Fläche flächenbündig an die umgebende Oberfläche anschließt. Das Material des Vorsprungs kann also insbesondere so weit gepresst werden, bis es nicht mehr vorsteht.

Es ist noch eine Ausgestaltung, dass mindestens ein Rücksprung zumindest abschnittweise an zwei gegenüberliegenden Rändern jeweils einen Vorsprung aufweist. Dadurch kann eine besonders gleichmäßige, beidseitige Verdrängung des Kunststoffs in den Rücksprung erreicht werden.

Es ist eine Weiterbildung, dass an mindestens einem Abschnitt mindestens eines Rücksprungs nur ein Vorsprung angeordnet oder vorhanden ist.

Es ist eine weitere Ausgestaltung, dass das in den Rücksprung verdrängte Kunststoffmaterial den Rücksprung verschließt. Das Verschließen bewirkt, dass der Rücksprung in Bezug auf seinen Querschnitt einen Hohlraum aufweist, der mit dem Füllmaterial füllbar ist. Dies ergibt den Vorteil, dass keine weitere Abdichtung des Rücksprungs mehr notwendig ist, z.B. gegen ein Herausfließen des noch flüssigen Füllmaterials. Auch liegt so eine besonders effektive Wärmebarriere zwischen dem Werkzeug und dem Füllmaterial vor.

Es ist noch eine weitere Ausgestaltung, dass sich die Vorsprünge über die gesamte Länge mindestens eines Rücksprungs erstrecken. Dadurch kann ein unterbrechungsfreies Verschließen oder Teilverschließen des Rücksprungs erreicht werden.

Es ist auch eine Ausgestaltung, dass sich mehrere Vorsprünge zueinander beabstandet entlang des Rücksprungs verteilen. Dadurch kann Kunststoffmaterial eingespart werden. Auch wird so eine Zugänglichkeit des Füllmaterials verbessert. Die Vorsprünge können beispielsweise als Reihe kurzer Vorsprünge (z.B. kugelkalottenförmiger Vorsprünge) angeordnet sein.

Es ist ferner eine Ausgestaltung, dass das Pressen mittels eines geheizten Werkzeugs durchgeführt wird. Dadurch kann das Pressen und Verdrängen der Vorsprünge mit einer besonders geringen Kraft und unter geringen Spannungen in dem Formkörper durchgeführt werden.

Es ist eine zum besonders einfachen Herstellen vorteilhafte Ausgestaltung, dass der geformte Formkörper zum Pressen auf ein anderes Werkzeug umgesetzt wird.

Es ist eine Weiterbildung, dass das Kunststoffmaterial ein spritzgussfähiger Kunststoff ist, z.B. ein thermoplastischer, duroplastischer oder elastomerer Kunststoff ist. So sind als thermoplastische Kunststoffe z. B.: Acrylnitril-Butadien-Styrol (ABS), Polyamide (PA), Polylactat (PLA), Polymethylmethacrylat (PMMA), Polyethylenterephthalat (PET), Polyethylen (PE), Polypropylen (PP), Polystyrol (PS), Polyetheretherketon (PEEK), Polyvinylchlorid (PVC) usw. oder Mischungen davon einsetzbar.

Es ist eine besonders vorteilhafte Ausgestaltung, dass das Kunststoffmaterial Polycarbonat (PC) aufweist oder ist, da Polycarbonat unter anderem preiswert ist und eine hohe Festigkeit, Schlagzähigkeit, Steifigkeit und Härte aufweist. Außerdem sind Polycarbonate gute Isolatoren gegen elektrischen Strom.

Das Kunststoffmaterial kann allgemein ein einziger Kunststoff (z.B. Polycarbonat) oder eine Mischung aus mehreren Kunststoffen (z.B. PC/ABS) sein. Das Kunststoffmaterial kann allgemein auch als "Kunststoff" bezeichnet werden.

Es ist eine besonders einfach verarbeitbare Ausgestaltung, dass das Füllmaterial eine niedrigschmelzende Metalllegierung ist, z.B. auf Basis von Zinn, Silber und/oder Kupfer. Jedoch kann das Füllmaterial auch ein anderes Metall, Metallmischung oder Legierung sein. Metalle weisen allgemein den Vorteil auf, dass sie eine hohe elektrische Leitfähigkeit aufweisen.

Das Einbringen des Füllmaterials kann dann insbesondere durch ein Metalldruckgießen durchgeführt werden.

Die Aufgabe wird auch gelöst durch ein Verbundbauteil aus Kunststoff und elektrisch leitfähigem Füllmaterial, wobei das Verbundbauteil wie oben beschrieben hergestellt worden ist. Das Verbundbauteil weist die gleichen Vorteile auf wie das Verfahren und kann analog ausgestaltet sein.

Es ist eine Ausgestaltung, dass das Verbundbauteil eine Beleuchtungsvorrichtung oder ein Teil davon ist. Die Beleuchtungsvorrichtung kann z.B. ein Modul, eine Lampe, eine Leuchte, ein Beleuchtungssystem usw. sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.

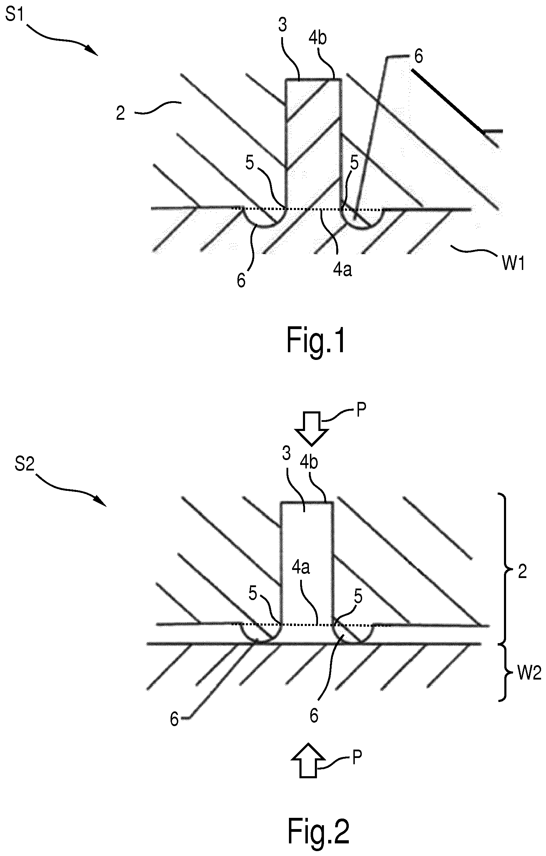

- Fig.1 bis 3: zeigen als Querschnittsansicht Schritte eines erfindungsgemäßen Herstellungsverfahrens.

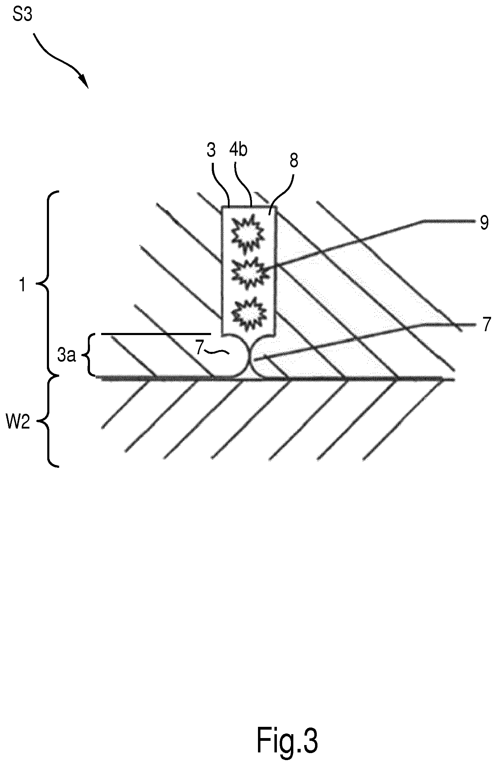

**Fig.1** zeigt als Querschnittsansicht einen ersten Schritt S1 eines Verfahrens zum Herstellen eines Verbundbauteils 1 (siehe Fig.3), wobei zugehörige Komponenten nur ausschnittsweise dargestellt sind.

In dem Schritt S1 wird ein Formkörper 2 aus Kunststoff - z.B. hier Polycarbonat - geformt, vorteilhafterweise durch Spritzgießen mittels eines ersten ("Guss"-) Werkzeugs W1 als einer Gussform. Dieses Formen ist besonders einfach, da der Formkörper 2 eine einfache Abformung des ersten Werkzeugs W1 sein kann.

Der so hergestellte Formkörper 2 weist hier mindestens einen Rücksprung 3 auf, der beispielhaft eine rechteckige Querschnittsform aufweist. In seiner Längsrichtung (senkrecht zur Bildebene) ist der Rücksprung 3 z.B. länglich ausgebildet und kann dann als ein Graben oder als eine Längsnut bezeichnet oder angesehen werden. Der Rücksprung 3 ist in Fig.1 und Fig.2 mit einer nach unten gerichteten Mündungsöffnung 4a, während der Boden oder Grund 4b darüber dargestellt ist.

Der Rücksprung 3 geht von der Mündungsöffnung 4a bzw. von seinen beiden Seitenrändern 5 unmittelbar in einen jeweiligen Vorsprung 6 über. Die beiden (hier nach unten gerichteten) Vorsprünge 6 ragen nach vorne über die Mündungsöffnung 4a vor. Alternativ könnten die Vorsprünge 6 aber auch von den Seitenrändern 5 beabstandet bzw. versetzt angeordnet sein (o. Abb.).

Die Vorsprünge 6 können sich über die gesamte Länge (senkrecht zur Bildebene) des Rücksprungs 3 erstrecken. Alternativ können sich mehrere in Längsrichtung lokal begrenzte Vorsprünge 6 zueinander beabstandet entlang des Rücksprungs 3 verteilen. Die Vorsprünge 6 weisen hier rein beispielhaft eine kugelkalottenartige Querschnittsform auf.

**Fig.2** zeigt als Querschnittsansicht einen zweiten Schritt S2 des Verfahrens zum Herstellen des Verbundbauteils 1, wobei zugehörige Komponenten nur ausschnittsweise dargestellt sind.

Und zwar ist nun ein Werkzeugwechsel von dem Gusswerkzeug W1 auf ein zweites ("Press"-) Werkzeug W2 durchgeführt worden. Der Werkzeugwechsel kann im Rahmen eines durchlaufenden Herstellungsablaufs durchgeführt werden. Alternativ kann der Formkörper 2 vorgefertigt werden und als Halbzeug einem Weiterverarbeitungsablauf zugeführt werden.

Das Presswerkzeug W2 ist dazu vorgesehen, auf die Vorsprünge 6 des Formkörpers 2 gepresst zu werden, wie durch die beiden Pfeile P angedeutet, und dadurch die Vorsprünge 6 einzuebnen. Um den Formkörper 2 nicht unter hohe Spannungen zu setzen, ist das Presswerkzeug W2 heizbar, so dass die Vorsprünge 6 durch Wärmeübertragung lokal plastifizieren können (insbesondere falls der Kunststoff ein thermoplastischer Kunststoff ist).

Durch den Schritt S2 wird Material des Formkörpers 2 in einen öffnungsseitigen Teilbereich 3a des Rücksprungs 3 verdrängt, d.h., in einen von der ursprünglichen Mündungsöffnung 4a ausgehenden vorderen Bereich 3a des Rücksprungs 3. Dies ist in **Fig.3** gezeigt, die im Folgenden genauer beschrieben wird.

In Fig.3 ist gezeigt, dass durch das Pressen in Schritt S2 ein dem Volumen der Vorsprünge 6 zumindest in etwa entsprechendes Volumen des Formkörpers 2 in den öffnungsseitigen Teilbereich 3a des ursprünglichen Rücksprungs 3 verdrängt worden ist. Dabei kann zumindest ein Teil des Materials der Vorsprünge 6 in den öffnungsseitigen Teilbereich 3a hinein verdrängt worden sein. Das verdrängte Material bildet dabei Dichtlippen 7, die von beiden Seiten in den Rücksprung 3 ragen. In dem gezeigten Ausführungsbeispiel stoßen die beiden Dichtlippen 7 aufeinander, so dass sie den Rücksprung 3 in dem öffnungsseitigen Teilbereich 3a verschließen. Dadurch wird in dem Rücksprung 3 ein Hohlraum 8 geschaffen, in den in einem dritten Schritt S3 fließfähiges Füllmaterial in Form einer geschmolzenen Metalllegierung 9 auf Basis von Zinn, Silber und/oder Kupfer eingebracht wird. Dies kann z.B. durch ein Metalldruckgießen geschehen. Da die Metalllegierung 9 durch die beiden Dichtlippen 7 von dem zweiten Werkzeug W2 getrennt ist, ist ein Wärmeabfluss von der Metalllegierung 9 nur gering, so dass sie eine besonders große Länge fließen kann, bevor sie erstarrt. Auch wird durch die geschlossenen Dichtlippen 7 ein Austritt der geschmolzenen Metalllegierung 9 aus dem Hohlraum 8 verhindert, was eine Handhabung erheblich erleichtert.

Nachdem die Metalllegierung 9 in dem Hohlraum 8 erstarrt ist, kann das so erzeugte Verbundbauteil 1 entnommen und/oder weiterverarbeitet werden. Die Metalllegierung 9 kann beispielsweise als eine Leiterbahn eingesetzt werden. Die Dichtlippen 7 bieten dabei den weiteren Vorteil, dass sie die Metalllegierung 9 schützen und zudem eine Berührsicherheit ermöglichen.

Das Verbundbauteil 1 kann beispielsweise als eine Beleuchtungsvorrichtung oder als ein Teil davon verwendet werden.

Obwohl die Erfindung im Detail durch die gezeigten Ausführungsbeispiele näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

So kann eine Querschnittsform des Rücksprungs auch eine andere Form aufweisen, z.B. eine dreieckige Form.

Ferner kann anstelle zweier Dichtlippen auch nur eine Dichtlippe vorhanden sein.

Zudem braucht der Rücksprung durch die Dichtlippe(n) nicht abgeschlossen zu sein.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: Verbundbauteil
- 2: Formkörper
- 3: Rücksprung
- 4: Mündungsöffnung
- 5: Seitenrand
- 6: Vorsprung
- 7: Dichtlippe
- 8: Hohlraum
- 9: Metalllegierung
- P: Pfeil
- S1: Erster Verfahrensschritt
- S2: Zweiter Verfahrensschritt
- S3: Dritter Verfahrensschritt
- W1: Erstes Werkzeug
- W2: Zweites Werkzeug

## Patentansprüche

1. Verfahren (S1-S3) zum Herstellen eines Verbundbauteils (1) aus einem Kunststoffmaterial und einem elektrisch leitfähigen Füllmaterial, wobei das Verfahren mindestens die folgenden Schritte aufweist:
- Formen eines Formkörpers (2) aus dem Kunststoffmaterial, welcher Formkörper (2) mindestens einen Rücksprung (3) aufweist, zu dem benachbart mindestens ein Vorsprung (6) angeordnet ist (S1);
- Pressen des mindestens einen Vorsprungs (6) so, dass dadurch Kunststoffmaterial (7) des Formkörpers (2) in einen öffnungsseitigen Bereich des benachbarten Rücksprungs (3) verdrängt wird (S2) und
- Einbringen von fließfähigem Füllmaterial (9) in mindestens einen Rücksprung (3) und Verfestigen des Füllmaterials (9) (S3).

2. Verfahren (S1-S3) nach Anspruch 1, bei dem mindestens ein Rücksprung (3) unmittelbar in den mindestens einen Vorsprung (6) übergeht.

3. Verfahren (S1-S3) nach einem der vorhergehenden Ansprüche, bei dem mindestens ein Rücksprung(3) an zwei gegenüberliegenden Rändern (5) jeweils einen Vorsprung (6) aufweist.

4. Verfahren (S1-S3) nach einem der vorhergehenden Ansprüche, bei dem das in den öffnungsseitigen Bereich des Rücksprungs (3) verdrängte Kunststoffmaterial (7) den Rücksprung (3) verschließt.

5. Verfahren (S1-S3) nach einem der vorhergehenden Ansprüche, bei dem sich die Vorsprünge (6) über die gesamte Länge mindestens eines Rücksprungs (3) erstrecken.

6. Verfahren (S1-S3) nach einem der Ansprüche 1 bis 4, bei dem sich mehrere Vorsprünge (6) zueinander beabstandet entlang mindestens eines Rücksprungs (3) verteilen.

7. Verfahren (S1-S3) nach einem der vorhergehenden Ansprüche, bei dem das Pressen (S2) mittels eines geheizten Werkzeugs (W2) durchgeführt wird.

8. Verfahren (S1-S3) nach einem der vorhergehenden Ansprüche, bei dem der geformte Formkörper (2) zum Pressen (S2) auf ein anderes Werkzeug (W2) umgesetzt wird.

9. Verfahren (S1-S3) nach einem der vorhergehenden Ansprüche, bei dem das Kunststoffmaterial des Formkörpers (2) Polycarbonat aufweist.

10. Verfahren (S1-S3) nach einem der vorhergehenden Ansprüche, bei dem das Füllmaterial eine niedrigschmelzende Metalllegierung (9) ist.

11. Verbundbauteil (1) aus Kunststoffmaterial (2) und elektrisch leitfähigem Füllmaterial (9), wobei das Verbundbauteil (1) gemäß dem Verfahren (S1-S3) nach einem der vorhergehenden Ansprüche hergestellt worden ist.

12. Verbundbauteil (1) nach Anspruch 11, wobei das Verbundbauteil (1) eine Beleuchtungsvorrichtung oder ein Teil davon ist.

## Claims

1. Method (S1-S3) for producing a composite component (1) from a plastic material and an electrically conductive filler material, wherein the method involves at least the following steps:
- molding a molded body (2) from the plastic material, which molded body (2) has at least one recess (3), which is arranged adjacent to at least one projection (6) (S1);
- pressing the at least one projection (6) so that plastic material (7) of the molded body (2) is thereby displaced into an opening-side region of the adjacent recess (3) (S2) and
- introducing flowable filler material (9) into at least one recess (3) and solidifying the filler material (9) (S3) .

2. Method (S1-S3) according to Claim 1, wherein at least one recess (3) passes directly into the at least one projection (6).

3. Method (S1-S3) according to one of the previous claims, wherein at least one recess (3) has a respective projection (6) at two opposite edges (5).

4. Method (S1-S3) according to one of the previous claims, wherein the plastic material (7) displaced into the opening-side region of the recess (3) closes the recess (3) .

5. Method (S1-S3) according to one of the previous claims, wherein the projections (6) extend over the entire length of at least one recess (3).

6. Method (S1-S3) according to one of claims 1 to 4, wherein several projections (6) spaced apart from each other are distributed along at least one recess (3).

7. Method (S1-S3) according to one of the previous claims, wherein the pressing (S2) is performed by means of a heated die (W2).

8. Method (S1-S3) according to one of the previous claims, wherein the formed molded body (2) is turned over onto another die (W2) for the pressing (S2).

9. Method (S1-S3) according to one of the previous claims, wherein the plastic material of the molded body (2) comprises polycarbonate.

10. Method (S1-S3) according to one of the previous claims, wherein the filler material is a low-melting metal alloy (9) .

11. Composite component (1) made from plastic material (2) and electrically conductive filler material (9), wherein the composite component (1) has been produced according to the method (S1-S3) according to one of the previous claims.

12. Composite component (1) according to Claim 11, wherein the composite component (1) is a lighting device or a part thereof.

## Revendications

1. Procédé (S1-S3) pour la fabrication d'une pièce composite (1) à partir d'une matière synthétique et d'une matière de charge électroconductrice, dans lequel le procédé présente au moins les étapes suivantes dans lesquelles :
- on façonne un corps moulé (2) à partir de la matière synthétique, ledit corps moulé (2) présentant au moins un évidement (3) au voisinage duquel est disposée au moins une saillie (6) (S1) ;
- on comprime ladite au moins une saillie (6) d'une manière telle que la matière synthétique (7) du corps moulé (2) est ainsi poussée dans une zone côté ouverture de l'évidement voisin (3) (S2) ; et
- on incorpore une matière de charge (9) apte à l'écoulement dans au moins un évidement (3) et on solidifie la matière de charge (9) (S3).

2. Procédé (S1-S3) selon la revendication 1, dans lequel au moins un évidement (3) se transforme directement pour obtenir ladite au moins une saillie (6).

3. Procédé (S1-S3) selon l'une quelconque des revendications précédentes, dans lequel au moins un évidement (3) présente, à deux bords opposés (5), respectivement une saillie (6).

4. Procédé (S1-S3) selon l'une quelconque des revendications précédentes, dans lequel la matière synthétique (7) poussée dans la zone côté ouverture de l'évidement (3) obture l'évidement (3).

5. Procédé (S1-S3) selon l'une quelconque des revendications précédentes, dans lequel les saillies (6) s'étendent sur toute la longueur d'au moins un évidement (3).

6. Procédé (S1-S3) selon l'une quelconque des revendications 1 à 4, dans lequel plusieurs saillies (6) s'étendent à distance les unes des autres le long d'au moins un évidement (3) .

7. Procédé (S1-S3) selon l'une quelconque des revendications précédentes, dans lequel la compression (S2) est mise en oeuvre au moyen d'un outil chauffé (W2).

8. Procédé (S1-S3) selon l'une quelconque des revendications précédentes, dans lequel le corps moulé façonné (2) est transféré pour la compression (S2) à un autre outil (W2).

9. Procédé (S1-S3) selon l'une quelconque des revendications précédentes, dans lequel la matière synthétique du corps moulé (2) présente un polycarbonate.

10. Procédé (S1-S3) selon l'une quelconque des revendications précédentes, dans lequel la matière de charge représente un alliage métallique (9) à bas point de fusion.

11. Pièce composite (1) réalisée à partir d'une matière synthétique (2) et d'une matière de charge électroconductrice (9), dans laquelle la pièce composite (1) a été fabriquée conformément au procédé (S1-S3) selon l'une quelconque des revendications précédentes.

12. Pièce composite (1) selon la revendication 11, dans laquelle la pièce composite (1) représente un dispositif d'éclairage ou une partie de ce dernier.
